# EUROPÄISCHE PATENTSCHRIFT

(11) **EP 1 972 765 B1**
(45) Veröffentlichungstag und Bekanntmachung des Hinweises auf die Patenterteilung: **17.11.2010**
(21) Anmeldenummer: 07123611.1
(22) Anmeldetag: 19.12.2007
(51) Int. Cl.: F01P 11/12, A01D 41/12

(54) **Landwirtschaftliche Erntemaschine**
Agricultural harvester
Moissonneuse agricole

(30) Priorität: 23.03.2007 DE 102007014628
(43) Veröffentlichungstag der Anmeldung: 24.09.2008
(73) Patentinhaber: CLAAS Selbstfahrende Erntemaschinen GmbH, 33428 Harsewinkel (DE)
(72) Erfinder: Renneke, Elmar, 33129, Delbrück-Ostenland (DE)

(56) Entgegenhaltungen:
- EP-A- 1 262 645
- WO-A-85/01311
- DE-A1- 19 547 348
- DE-A1- 19 857 681
- US-A1- 2004 003 578
- US-B1- 6 248 145

## Beschreibung

Die Erfindung betrifft eine landwirtschaftliche Erntemaschine nach dem Oberbegriff des Anspruchs 1,

Aus der DE 24 18 054 A1 ist ein Mähdrescher bekannt, bei dem einem Verbrennungsmotor in Luftzuführrichtung eine Kühleinrichtung vorgelagert ist. Die Kühleinrichtung besteht aus mehreren Radiatoren, welche unterschiedliche Kühlmedien enthalten, um den Verbrennungsmotor und beispielsweise den Ölkreislauf zu kühlen und einem Ventilator, der die benötigte Luft entsprechend ansaugt, Der Kühleinrichtung ist in Luftzuführrichtung ein Luftfilter vorgelagert, der dazu dient, die zur Kühlung und für den Verbrennungsmotor benötigte Luft entsprechend von durch den Ernteprozess aufgewirbelten Staubteilchen zu befreien. Hierzu besteht der Luftfilter aus einem trommelförmigen Gehäuse, dessen Mantelfläche siebartig ausgebildet ist. Da sich die einzelnen Öffnungen des Siebes während der Luftansaugung mit den Staubteilchen zusetzen und es somit zu einer unzureichenden Zuführung der Luft kommen könnte, ist der Luftfilter rotierbar ausgebildet und die siebartige Mantelfläche kann somit an einer Reinigungseinrichtung vorbeigeführt werden, Die Reinigungseinrichtung besteht aus einem Luftführungskanal, der die siebartige Mantelfläche des Luftfilters partiell umschließt Der Kanal führt an den Radiatoren der Kühleinrichtung vorbei bis zu dem Ventilator und deckt einen Bereich dessen Ansaugfläche ab. Durch den Betrieb des Ventilators wird in dem Kanal ein entsprechendes Unterdruck erzeugt, der bewirkt, dass die auf der Außenfläche des Luftfilters befindlichen Staubteilchen von der siebartigen Mantelfläche abgesaugt werden um den Luftfilter dadurch zu reinigen. Um sowohl den Luftfilter von seiner Innenseite her als auch die Radiatoren in gewissen Abständen reinigen zu können, ist der Luftfilter und der dem Luftfilter zugeordnete Abschnitt des Luftführungskanals auf einer schwenkbaren Seitenwand des Mähdreschers angeordnet. Nachteilig an dem aus der DE 24 18 054 A1 bekannten Aufbau ist es, dass bei der Schwenkbewegung der Seitenwand in die Offenstellung sowohl der Antrieb für die Luftfilterrotation entkoppelt wird, als auch der Luftführungskanal getrennt wird. Hierzu muss der Kanal entsprechend so ausgebildet sein, dass das Trennen bei der Schwenkbewegung möglich ist und gleichzeitig in der Geschlossenstellung eine möglichst dichte Verbindung an der Trennstelle erfolgt, um den für die Reinigung erforderlichen Unterdruck entsprechend erzeugen zu können. Ein derartiger Aufbau erfordert enge Toleranzen was die konstruktive Auslegung, die Herstellung und die Montage des Luftführungskanals, aber auch des Antriebes der Luftfilterrotation entsprechend verteuert. Weiterhin ist es nachteilig, dass der mit Staubpartikeln durchsetzte Luftstrom durch den Ventilator hindurch den Verbrennungsmotor umströmt, was dazu führt, dass der Verbrennungsmotor sehr stark verdreckt und schlimmstenfalls sich auf dem Verbrennungsmotor abgelagerte Staubschichten aufgrund der hohen Wärmeentwicklung entzündet.

Aus der US 6,248,145 B1 ist eine landwirtschaftliche Erntemaschine bekannt, die einen rotierenden Luftfilter für einen wasser oder luftgekühlten Antriebsmotor aufweist. Der Luftfilter ist mit einer Reingungseinrichtung versehen, der ein Sauggebläse zugeordnet ist. Dem Sauggebläse ist ein Leitungsrohr zugeordnet, über welches die Reinigungseinrichtung dem Sauggebläse verbunden ist, um die von der Reinigungseinrichtung vom Luftfilter entfernten Verunreinigungen nach außen abzuführen. Der Luftfilter und das Sauggebläse sind dabei an einem Kühlergehäuse angeordnet.

Die DE 195 47 348 A1 beschreibt einen selbstfahrenden Feldhäcksler mit einem Antriebsmotor, dem ein Kühlaggregat mit einer rotierenden Siebeinrichtung und einer feststehenden Reinigungseinrichtung, die die Oberfläche der Siebeinrichtung von Schmutz und Erntegutteilen befreit, zugeordnet sind. Die Reinigungseinrichtung weist ein Sauggebläse auf, welches gemeinsam mit der Siebeinrichtung auf einem Schwenkrahmen angeordnet ist.

Der Erfindung liegt die Aufgabe zugrunde, eine landwirtschaftliche Erntemaschine nach dem Oberbegriff des Anspruchs 1 derart weiterzubilden, das der Aufbau der Reinigungseinrichtung eines Luftfilters konstruktiv einfach und kostengünstig ausgebildet ist.

Diese Aufgabe wird erfindungsgemäß durch die kennzeichnenden Merkmale des Anspruchs 1 gelöst.

Dadurch, dass der Reinigungseinrichtung ein gesondertes, von dem Ventilator der Kühleinrichtung unabhängiges Absauggebläse zugeordnet ist und wobei das Absauggebläse und der Luftfilter eine gemeinsame Haltevorrichtung aufweisen ist der Aufbau der Reinigungseinrichtung erfindungsgemäß konstruktiv einfach und kostengünstig ausgebildet, da weder enge Toleranzen, noch lösbare miteinander fluchtende Verbindungsstellen erforderlich sind.

Bei einer vorteilhaften Weiterbildung der Erfindung ist die Haltevorrichtung als partielles Abdeckelement für die Kühleinrichtung ausgebildet. Beispielhaft kann die Haltevorrichtung ein Verkleidungselement der landwirtschaftlichen Erntemaschine sein, dass die nicht von dem Luftfilter abgedeckten Bereiche der KOhieinrichtung nach Au-βen hin abdeckt. Somit ergibt sich ein einfacher und aufgrund der mehrfachen Nutzung der Bauelemente kostengünstiger Aufbau der Erntemaschine.

Vorteilhaft weisen der Luftfilter und das Absauggebläse einen gemeinsamen Antrieb auf, so dass Maschinenseitig nur eine Verbindungsstelle für eine entsprechende Antnebsenergieübertragung vorgesehen werden braucht.

Der gemeinsame Antrieb ist bei einer vorteilhaften Weiterbildung als ein den Luftfilter und ein Antriebsrad des Absauggebläses zumindest bereichsweise umschlingender Riementrieb ausgebildet. Ein derartiger Antrieb ist kostengünstig herstellbar, robust gegen Schwingungen und sehr langlebig. Die Antriebsenergie des Antriebs kann beispielsweise elektromotorisch, hydraulisch und/oder mittels mechanischer Kopplungselemente direkt von dem Verbrennungsmotor erzeugt werden.

Um eine Reinigung des Luftfilters von seiner Innenseite her und eine gute Zugänglichkeit sowohl zu der Kühleinrichtung aber auch zu dem Verbrennungsmotor zu gewährleisten, ist die Haltevorrichtung um eine Schwenkachse herum schwenkbar ausgebildet, wobei die Schwenkachse bei einer Weiterbildung der Erfindung beabstandet zu der Haltevorrichtung angeordnet ist.

Bei einer vorteilhaften Weiterbildung der Erfindung ist dem Absauggebläse ein Abluftschlauch zugeordnet, so dass die nach der Reinigung des Luftfilters mit Staubpartikeln angereicherte Abluft an einer Position an die Umwelt abgegeben wird, die entfernt von dem Luftfilter aber auch dem Verbrennungsmotor liegt Somit wird verhindert, dass sich abgesaugte Staubpartikel direkt wieder auf dem Luftfilter ablagern können und der Verbrennungsmotor mit Luft umströmt wird, die mit Staubpartikel angereichert ist.

Vorteilhaft liegt die Mittelachse des Anschlusses des Abluftschlauches an dem Absauggebläse zumindest annähernd auf der Schwenkachse, so dass der Abluftschlauch während der Schwenkbewegung der Haltevorrichtung zwischen der Geschlossenstellung in die Offenstellung nicht im Querschnitt verjüngt wird. In der Regel erfolgt eine Schwenkbewegung in einem Winkelbereich bis zu 45°, so dass der Abluftschlauch lediglich geringfügigen Torsionsbelastungen ausgesetzt ist.

Das Absauggebläse ist in Gebrauchsstellung vorteilhaft mittels eines Teils der Außenverkleidung der Erntemaschine abgedeckt, so dass es gegen äußere Einflüsse geschützt ist und die Erntemaschine ein optisch ansprechendes Design aufweist. Um jetzt die Außenverkleidung bei der Schwenkbewegung der Haltevorrichtung vor Beschädigungen zu schützen, ist die Haltevorrichtung bei einer vorteilhaften Weiterbildung der Erfindung mittels eines Koppelelementes mit einem schwenkbaren Teil der Außenverkleidung der Erntemaschine wirkverbunden, Ein derartiger Aufbau bietet den weiteren Vorteil, dass mittels eines Schwenkvorgangs beide Elemente gleichzeitig verschwenkt werden,

Die landwirtschaftliche Erntemaschine ist vorteilhaft als Mähdrescher ausgebildet.

Anhand der beigefügten Zeichnungen wird die Erfindung nachfolgend näher erläutert.
Es zeigen:
Fig. 1: eine schematisch dargestellte Seitenansicht einer landwirtschaftlichen Erntemaschine,
Fig. 2: eine vergrößerte Detailansicht des Ausschnitts X aus Figur 1,
Fig. 3: eine Draufsicht auf den in Figur 2 dargestellten Ausschnitt,
Fig, 4: eine perspektivische Ansicht des in Figur 2 dargestellten Ausschnitts und
Fig. 5: eine vergrößerte perspektivische Ansicht des Ausschnitts X aus Figur 1.

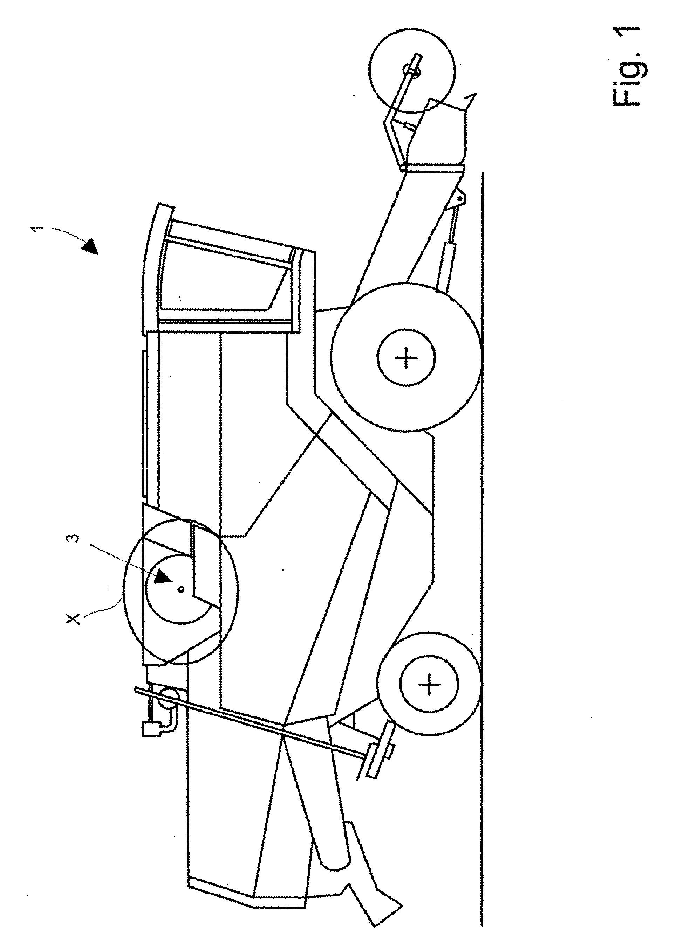

In Figur 1 ist eine landwirtschaftliche Erntemaschine (1) in Form eines hier beispielhaft erwähnten Mähdreschers in einer schematischen Seitenansicht dargestellt, Im oberen mittleren Bereich des Mähdreschers ist ein Verbrennungsmotor angeordnet, der entsprechender Kühlung bedarf. Um den benötigten Luftstrom der Kühlluft von bei dem Ernteprozess in der Luft befindlichen Staubpartikeln zu schützen, wird diese durch einen Luftfilter (3) hindurch in die Maschine hinein angesaugt.

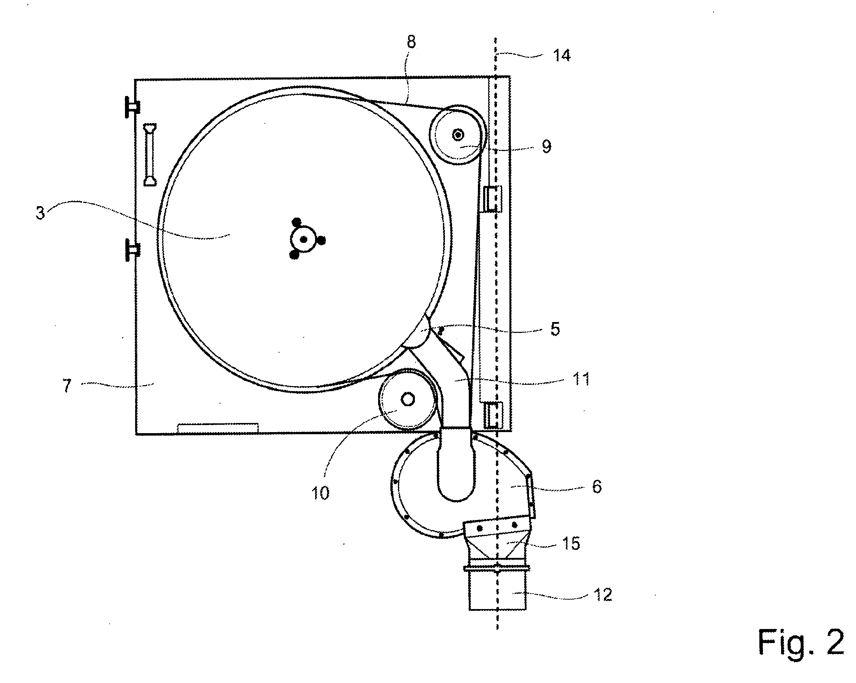

Figur 2 zeigt eine vergrößerte Detailansicht des Ausschnitts X aus Figur 1, wobei aus Gründen der verbesserten Darstellung die Außenverkleidung weggelassen wurde. Der trommelförmige Luftfilter (3) ist in etwa mittig auf der Haltevorrichtung (7) platziert, wobei die Bodenfläche des Luftfilters (3) luftundurchlässig ausgebildet ist. An der Haltevorrichtung (7) ist zusätzlich ein Absauggebläse (6) angeordnet, welches über einen Kanal (11) mit einer an der Mantelfläche des Luftfilters (3) anliegenden Reinigungseinrichtung (5) verbunden ist. Die bei der Reinigung von der Mantelfläche abgesaugte, mit Staubpartikeln angereicherte Luft wird von dem Absauggebläse (6) über einen entsprechenden Anschluss (15) einem Abluftschlauch (12) zugeführt, der diese dann an einer entfernt von dem Luftfilter (3) gelegenen Stelle an die Umwelt abgibt. Zum Rotieren des Luftfilters (3) und zum Antrieb des Absauggebläses (6) sind diese von einem als Riementrieb (8) ausgebildeten Antrieb umschlossen. Der Riementrieb (8) wird von einem Antriebsrad (9) angetrieben, weiches beispielsweise mit dem Verbrennungsmotor wirkverbunden ist, Der in Drehbewegung versetzte Riemen des Riementriebes (8) versetzt durch seine Umschlingung den Luftfilter (3) in Drehbewegung, so dass seine Mantelfläche an der Reinigungseinrichtung (5) vorbeigeführt wird, Ober ein Führungsrad (10) wird der Riemen einem hier nicht dargestellten Antriebsrad des Absauggebläses (6) zugeführt, so dass der Luftfilter (3) und das Absauggebläse (6) gemeinsam angetrieben werden, Um den Luftfilter (3) gelegentlich auch von seiner Innenseite her reinigen zu können und eine gute Zugänglichkeit zu der hinter der Haltevorrichtung (7) befindlichen Kühleinrichtung zu gewährleisten, ist die Haltevorrichtung (7) um die Schwenkachse (14) herum schwenkbar. Die vertikale Mittelachse des Anschlusses (15) zwischen Absauggebläse (6) und Abluftschlauch (12) ist annähernd auf der Schwenkachse (14) angeordnet, so dass der Abluftschlauch (12) bei der Schwenkbewegung in seinem Querschnitt nicht verjüngt wird und lediglich mit geringfügigen Torsionskräften belastet wird.

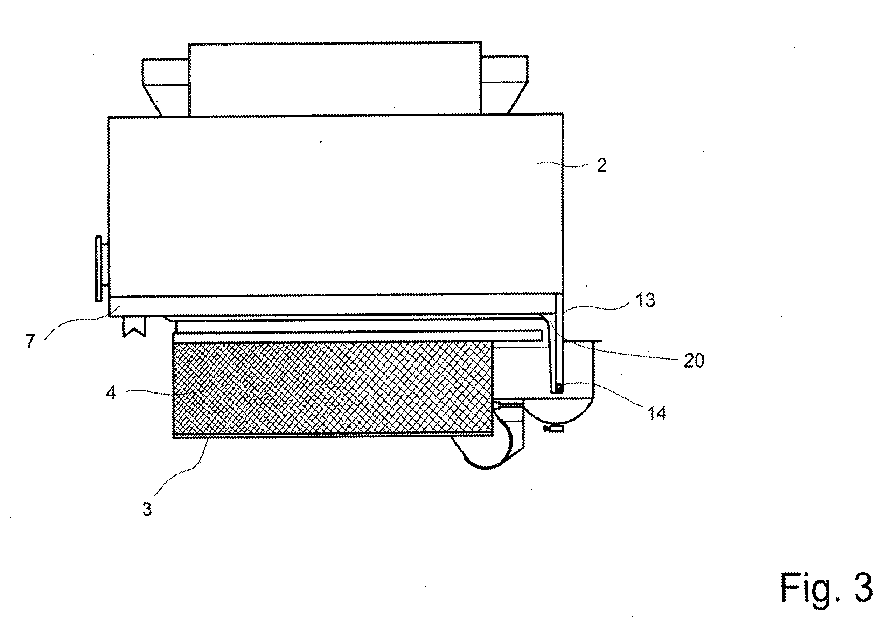

In Figur 3 ist eine Draufsicht des in Figur 2 dargestellten Ausschnitts dargestellt Die hier nicht näher dargestellte Kühleinrichtung (2) wird in Luftzuführrichtung von der Haltevorrichtung (7) abgedeckt. Von dieser ragt der trommelförmige Luftfilter (3) ab, dessen Mantelfläche (4) siebartig ausgebildet ist. Die Kühleinrichtung (2) weist abstehende Arme (13) auf, die mit entsprechenden Laschen (20) der Haltevorrichtung (7) wirkverbunden sind, um ein Verschwenken der Haltevorrichtung (7) gegenüber der Kühleinrichtung (2) um die Schwenkachse (14) herum zu ermöglichen.

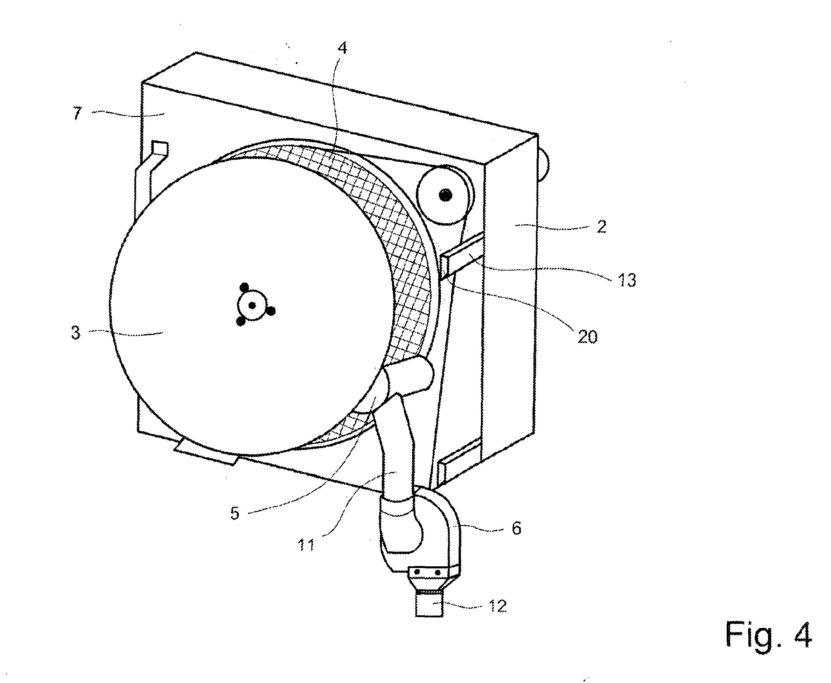

Zur Verdeutschung des Aufbaus ist in Figur 4 der in Figur 2 gezeigte Ausschnitt nochmals in einer perspektivischen Ansicht dargestellt. Die Kühlvorrichtung (2) ist über Arme (13) und Laschen (20) verschwenkbar mit der Haltevorrichtung (7) verbunden. An der Haltevorrichtung (7) ist sowohl der trommelförmige Luftfilter (3) als auch das Absauggebläse (6) angeordnet Bei der Rotation des Luftfilters (3) wird seine siebartige Mantelfläche (4) an der Reinigungseinrichtung (5) vorbeigeführt, in der die auf der Mantelfläche (4) abgelagerten Staubpartikel mittels des Absauggebläses (6) abgesaugt werden, Die mit Staubpartikeln angereicherte Luft wird von der Reinigungseinrichtung (5) über einen Kanal (11) und das Absauggebläse (6) einem Abluftschlauch (12) zugeführt.

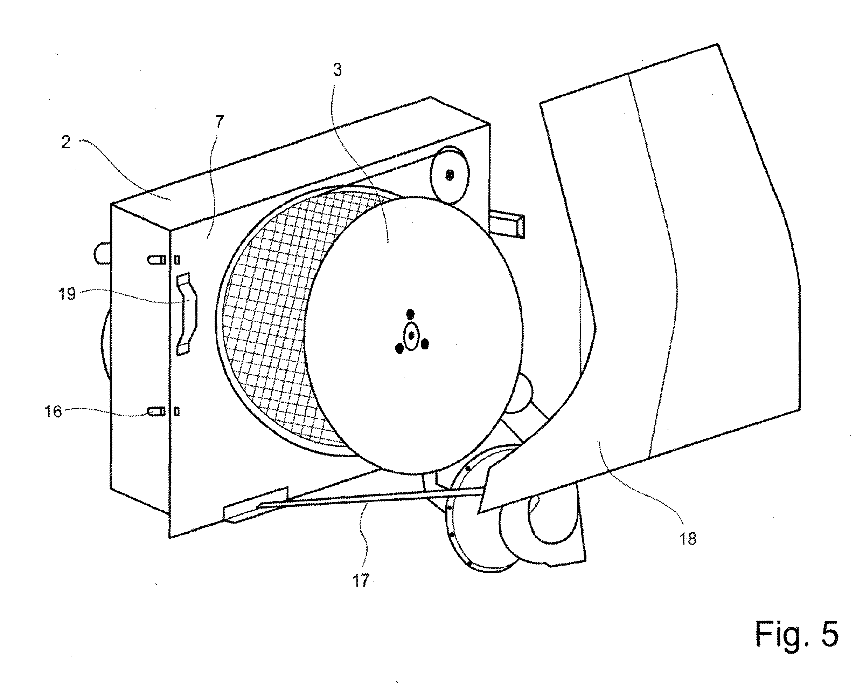

In Figur 5 ist der Ausschnitt X aus Figur 1 in einer vergrößerten perspektivischen Ansicht dargestellt. Um die Haltevorrichtung (7) gegenüber der Kühleinrichtung (2) verschwenken zu können, muss der Bediener entsprechende Verriegelungen (16) öffnen und kann dann mittels einer Handhabe (19) die Haltevorrichtung (7) manuell verschwenken. Damit es bei der Schwenkbewegung nicht zu einer Kollision mit der den Luftfilter (3) nach Außen hin teilweise überdeckenden Außenverkleidung (18) des Mähdreschers kommt, ist die Außenverkleidung (18) ebenfalls verschwenkbar ausgebildet. Der Aufbau ist bedienerfreundlich derart ausgebildet, dass die Außenverkleidung (18) mittels eines Koppelelementes (17) mit der Haltevorrichtung (7) wirkverbunden ist, so dass die Außenverkleidung (18) bei der Schwenkbewegung der Haltevorrichtung (7) unmittelbar mitverschwetikt wird. Das Koppelelement (17) kann verstellbar an der Haltevorrichtung (7) und/oder der Außenverkleidung (18) angeordnet sein, so dass mittels des Koppelelementes (17) die räumliche Lage der Außenverkleidung (18) im Bezug auf weitere Verkleidungselemente des Mähdreschers einstellbar ist.

### Bezugszeichenliste:

- 1: Erntemaschine
- 2: Kühleinrichtung
- 3: Luftfilter
- 4: Mantelfläche
- 5: Reinigungseinrichtung
- 6: Absauggebläse
- 7: Haltevorrichtung
- 8: Riementrieb
- 9: Antriebsrad
- 10: Führungsrad
- 11: Kanal
- 12: Abluftschlauch
- 13: Arm
- 14: Schwenkachse
- 15: Anschluss
- 16: Verriegelung
- 17: Koppelelement
- 18: Außenverkleidung
- 19: Handhabe
- 20: Lasche

## Patentansprüche

1. Landwirtschaftliche Erntemaschine (1) mit zumindest einem Verbrennungsmotor, dem Prozessluft und/oder Kühlluft zuführbar ist, einer dem Verbrennungsmotor in Luftzuführrichtung vorgelagerten Kühleinrichtung (2), bestehend aus zumindest einem ein Kühlmedium beinhaltenden Wärmetauscher und/oder zumindest einem Ventilator, einem der Kühleinrichtung (2) In Luftzuführrichtung vorgelagerten trommelförmigen Luftfilter (3), welcher an seiner Mantelfläche (4) siebartig ausgebildet ist, und einer der Mantelfläche (4) partiell zugeordneten Reinigungseinrichtung (5), wobei die Mantelfläche (4) des Luftfilters (3) rotierend an der Reinigungseinrichtung (5) vorbeiführbar ist, wobei der Reinigungseinrichtung (5) ein Absauggebläse (6) zugeordnet ist, wobei das Absauggebläse (6) und der Luftfilter (3) eine gemeinsame Haltevorrichtung (7) aufweisen und dass dem Absauggebläse (6) ein Abluftschlauch (12) zugeordnet ist,
**dadurch gekennzeichnet,**
**dass** die Mittelachse des Anschlusses (15) des Abluftschlauches (12) an dem Absauggebläse (6) zumindest annähernd auf der Schwenkachse (14) liegt.

2. Landwirtschaftliche Erntemaschine (1) nach Anspruch 1, **dadurch gekennzeichnet, dass** die Haltevorrichtung (7) als partielles Abdeckelement für die Kühleinrichtung (2) ausgebildet ist.

3. Landwirtschaftliche Erntemaschine (1) nach einem der vorstehenden Ansprüche, **dadurch gekennzeichnet, dass** der Luftfilter (3) und das Absauggebläse (6) einen gemeinsamen Antrieb aufweisen.

4. Landwirtschaftilche Erntemaschine (1) nach Anspruch 3, **dadurch gekennzeichnet, dass** der Antrieb als ein den Luftfilter (3) und ein Antriebsrad des Absauggebläses (6) zumindest bereichsweise umschlingender Riementrieb (8) ausgebildet ist.

5. Landwirtschaftliche Erntemaschine (1) nach einem der vorstehenden Ansprüche, **dadurch gekennzeichnet, dass** die Haltevorrichtung (7) um eine Schwenkachse (14) herum schwenkbar ausgebildet ist.

6. Landwirtschaftliche Erntemaschine (1) nach Anspruch 5, **dadurch gekennzeichnet, dass** die Schwenkachse (14) beabstandet zu der Haltevorrichtung (7) angeordnet ist.

7. Landwirtschaftliche Erntemaschine (1) nach einem der vorstehenden Ansprüche, **dadurch gekennzeichnet, dass** die Haltevorrichtung (7) mittels eines Koppelelementes (17) mit einem schwenkbaren Teil der Außenverkleidung (18) der Erntemaschine (1) wirkverbunden ist.

8. Landwirtschaftliche Erntemaschine (1) nach einem der vorstehenden Ansprüche, **dadurch gekennzeichnet, dass** die Erntemaschine (1) als Mähdrescher ausgebildet ist.

## Claims

1. An agricultural harvesting machine (1) having at least one combustion engine to which process air and/or cooling air can be fed, a cooling device (2) disposed upstream of the combustion engine in the air feed direction and comprising at least one heat exchanger containing a cooling medium and/or at least one fan, a drum-shaped air filter (3) which is disposed upstream of the cooling device (2) in the air feed direction and which is of a sieve-like configuration at its peripheral surface (4), and a cleaning device (5) partially associated with the peripheral surface (4), wherein the peripheral surface (4) of the air filter (3) can be moved rotatingly past the cleaning device (5), wherein a suction removal fan (6) is associated with the cleaning device (5), wherein the suction removal fan (6) and the air filter (3) have a common holding device (7) and an air outlet hose (12) is associated with the suction removal fan (6),
**characterised in that** the central axis of the connection (15) of the air outlet hose (12) to the suction removal fan (6) is at least approximately on the pivot axis (14).

2. An agricultural harvesting machine (1) according to claim 1 **characterised in that** the holding device (7) is in the form of a partial cover element for the cooling device (2).

3. An agricultural harvesting machine (1) according to one of the preceding claims **characterised in that** the air filter (3) and the suction removal fan (6) have a common drive.

4. An agricultural harvesting machine (1) according to claim 3 **characterised in that** the drive is in the form of a belt transmission (8) which passes at least region-wise around the air filter (3) and a drive wheel of the suction removal fan (6).

5. An agricultural harvesting machine (1) according to one of the preceding claims **characterised in that** the holding device (7) is adapted to be pivotable about a pivot axis (14).

6. An agricultural harvesting machine (1) according to claim 5 **characterised in that** the pivot axis (14) is arranged in spaced relationship with the holding device (7).

7. An agricultural harvesting machine (1) according to one of the preceding claims **characterised in that** the holding device (7) is operatively connected by means of a coupling element (17) to a pivotable part of the external casing (18) of the harvesting machine (1).

8. An agricultural harvesting machine (1) according to one of the preceding claims **characterised in that** the harvesting machine (1) is in the form of a combine harvester.

## Revendications

1. Moissonneuse agricole (1) comprenant au moins un moteur à combustion, auquel de l'air de traitement et/ou de l'air de refroidissement peut être amené, un dispositif de refroidissement (2) placé en amont du moteur à combustion dans le sens de l'arrivée d'air, constitué d'au moins un échangeur de chaleur contenant un milieu réfrigérant et/ou d'au moins un ventilateur, un filtre à air (3) en forme de tambour, placé en amont du dispositif de refroidissement (2) dans le sens de l'arrivée d'air, lequel filtre est conçu en forme de tamis sur sa surface d'enveloppe (4), et un dispositif de nettoyage (5) associé partiellement à la surface d'enveloppe (4), la surface d'enveloppe (4) du filtre à air (3) pouvant être guidée en rotation en passant devant le dispositif de nettoyage (5), un ventilateur extracteur (6) étant associé au dispositif de nettoyage (5), le ventilateur extracteur (6) et le filtre à air (3) présentant un dispositif de retenue (7) commun et un flexible d'évacuation d'air (12) étant associé au ventilateur extracteur (6),
**caractérisée en ce que** :
l'axe médian du branchement (15) du flexible d'évacuation d'air (12) est situé sur le ventilateur extracteur (6) au moins approximativement sur l'axe de pivotement (14).

2. Moissonneuse agricole (1) selon la revendication 1, **caractérisée en ce que** le dispositif de retenue (7) est conçu comme élément de recouvrement partiel pour le dispositif de refroidissement (2).

3. Moissonneuse agricole (1) selon l'une quelconque des revendications précédentes, **caractérisée en ce que** le filtre à air (3) et le ventilateur extracteur (6) présentent un entraînement commun.

4. Moissonneuse agricole (1) selon la revendication 3, **caractérisée en ce que** l'entraînement est conçu comme une commande par courroie (8) entourant au moins par zones le filtre à air (3) et une roue d'entraînement du ventilateur extracteur (6).

5. Moissonneuse agricole (1) selon l'une quelconque des revendications précédentes, **caractérisée en ce que** le dispositif de retenue (7) est conçu de façon à pouvoir basculer autour d'un axe de pivotement (14).

6. Moissonneuse agricole (1) selon la revendication 5, **caractérisée en ce que** l'axe de pivotement (14) est disposé à distance du dispositif de retenue (7).

7. Moissonneuse agricole (1) selon l'une quelconque des revendications précédentes, **caractérisée en ce que** le dispositif de retenue (7) est en liaison active au moyen d'un élément de couplage (17) avec une partie basculante de l'habillage extérieur (18) de la moissonneuse (1).

8. Moissonneuse agricole (1) selon l'une quelconque des revendications précédentes, **caractérisée en ce que** la moissonneuse (1) est conçue comme moissonneuse-batteuse.
